# EUROPEAN PATENT SPECIFICATION

(11) **EP 2 690 839 B1**
(45) Date of publication and mention of the grant of the patent: **26.09.2018**
(21) Application number: 12305895.0
(22) Date of filing: 23.07.2012
(51) Int. Cl.: H04W 4/80, H04W 12/02, H04L 29/06, H04M 1/725, H04W 4/00, H04B 5/00

(54) **NFC apparatus capable to perform a contactless tag reading function**
NFC-Vorrichtung zur Ausführung einer kontaktlosen Etikettlesefunktion
Appareil de communication en champ proche capable d'effectuer une fonction de lecture d'étiquette sans contact

(43) Date of publication of application: 29.01.2014
(73) Proprietor: STMicroelectronics (Rousset) SAS, 13790 Rousset (FR); STMicroelectronics Application GmbH, 85609 Aschheim (DE)
(72) Inventor: Boehler, Juergen, 81827 MÜNICH (DE); Charles, Alexandre, 13390 AURIOL (FR)
(74) Representative: Casalonga, Axel

(56) References cited:
- WO-A2-2010/011055
- US-A1- 2012 011 572
- "Smart cards; UICC-CLF interface; CLF Host Controller Interface (Release 7)", ETSI DRAFT; SCPT070124, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.3.0, 12 March 2007 (2007-03-12), pages 1-78, XP014051651, [retrieved on 2007-03-12]
- MARIE REVEILHAC ET AL: "Promising Secure Element Alternatives for NFC Technology", PROCEEDINGS 2009 FIRST INTERNATIONAL WORKSHOP ON NEAR FIELD COMMUNICATION - NFC '09, IEEE, PISCATAWAY, NJ, USA, 24 February 2009 (2009-02-24), pages 75-80, XP031500082, ISBN: 978-0-7695-3577-7

## Description

The invention relates to the communication between elements, in particular between a NFC contactless tag reader, for example located within a wireless apparatus, such as a mobile phone, and a tag, especially when such communication is encrypted according to a proprietary protocol like MIFARE™ and FeliCa™.

MIFARE is a registered trademark of NXP B.V. in the U.S. and other jurisdictions, and is used under license.

Further to its conventional telephone function, a mobile phone may be used for exchanging information with a contactless device by using a contactless communication protocol.

This permits to exchange information between the contactless device and elements located within the mobile phone. Plenty of applications are thus possible such as mobile ticketing in public transport (the mobile phone is able to read the content of a boarding pass) or mobile payment (the mobile phone is able to read the actual loaded value on a debit payment card).

Near Field Communication or NFC is a short range high frequency wireless communication technology which enables such exchange of data between two contactless devices over a short distance, for example 10 centimetres.

NFC is an open platform technology standardized in ISO/IEC 18092 and ISO/IEC 21481 but incorporates a variety of pre-existing standards including ISO/IEC 14443 protocol type A and type B.

NFC devices have the capability to support, in particular, a reader/writer mode which can be used to read and write NFC tags. Among the types of tags selected by the NFC Forum, we can cite the tags implementing the MIFARE™ communication protocol and the tags implementing the FeliCa™ communication protocol.

In the NFC technology, information is generally transmitted within frames as it is the case for example for protocol type A of standard ISO/IEC 14443.

However, some communication protocols, as for example MIFARE™ and FeliCa™ protocols, use also transmission frames including encrypted bits according to a proprietary encryption algorithm.

Despite the use of such encrypted frames, those protocols remain compatible with existing standards, especially concerning the transmission frames structure.

This is for example the case for the communication protocol MIFARE™, which remains compatible with standard ISO/IEC 14443. Information about this protocol are disclosed in particular in the document of the company NXP Semiconductors entitled "AN 10 833, MIFARE™ Type Identification Procedure" rev 3. 2, August 29, 2011, 018432. Other details about this protocol can be found for example in the documents of Michael Zilbermann, entitled "Security Analysis of Contactless Payment Systels in practice", November 2, 2009, Ruhr-Universität Bochum.

Concerning the FeliCa™ protocol, it conforms to Radio Frequency (RF) technology type F as defined in ISO/IEC 18092. The framing and protocol of this type F technology are also described in Japanese industrial standard JIS X 6319-4.

More information concerning FeliCa™ protocol can be found in technical documents located on the website of the Japanese Company Sony.

Published patent application US 2012/011572 discloses an NFC apparatus with the capability to execute a reader application for reading tags and a card application for emulating a contactless card. According to the invention, it is proposed an enhanced generic architecture for specific NFC device host applications requirement secure element based cryptographic functions.

These functions may be MIFARE™ classic reader function, FeliCa™ reader function, and more generally, any reading/writing function requiring an exchange of encrypted frames between the NFC apparatus, for example a mobile phone, acting as a reader/writer, and a tag.

According to the invention, a NFC apparatus is proposed, which is capable to perform a contactless tag reading/writing function; said NFC apparatus comprises
- an antenna configured to cooperate with said tag for exchanging encrypted frames with said tag,
- a NFC controller including an emission/reception interface connected to said antenna, a first controller interface, and a second controller interface;
said NFC apparatus further comprises
- a first communication channel coupled to said first controller interface,
- a second communication channel connected to said second controller interface,
- a secure element including a secure element interface connected to said first communication channel, encryption/decryption means configured to encrypt data to be sent on said first communication channel for being framed into said encrypted frames and to decrypt encrypted data extracted from said encrypted frames and received from said first communication channel, management means configured to control said encryption/decryption means for managing the encrypted communication with said NFC controller,
- a device host including a device host interface coupled to said second controller interface, and control means configured to control said management means through non encrypted commands exchanged on said first and second communication channels.

Thus, according to the invention, the secure element includes the encryption/decryption means (also called "cryptolibrary") and management means (also called "terminal application") configured to control the encryption/decryption means for managing the encrypted communication with the NFC controller.

The control means, also called "terminal interface application", hosted in the device host has to provide only a few commands to control the terminal application within the secure element.

Thus, there is less communication traffic via the NFC controller and a gain of transaction time.

The terminal application manages all ciphered RF communication with the NFC controller.

Each of the first controller interface and secure element interface comprises a raw RF gate connected there between by a pipe (logical channel). As indicated in ETSI TS 102 622, a gate is an entry point to a service that is operated inside a host (here the secure element or the NFC controller), and a pipe is a logical communication channel between two gates.

And, the pipe created between the raw RF gates of the secure element and the NFC controller and carried by said first communication channel, allows exchanging encrypted RF data between RF tag and the secure element. There is neither encryption nor decryption performed within the NFC controller. All the encryption/decryption functions are performed within the secure element and under the control of the management means (terminal application).

These two gates are called "raw RF gates", because they allow the passage of raw RF data, i.e. encrypted data received from and intended to the RF (radiofrequency) communication with the tag, without being decrypted.

Further, the first communication channel allows also exchange of non encrypted commands between the management means (terminal application) and the control means (terminal interface application) on another logical channel.

Thus, according to an embodiment, said first controller interface and said secure element interface are interfaces of the HCI type, and said first communication channel is a SWP physical link carrying two logical channels for respectively carrying said encrypted data and said non encrypted commands.

Preferably, both interfaces of the HCI type are configured to exchange data there between by using the SHDLC mode, as defined for example in ETSI TS 102 613.

As a matter of fact, instead of using CLT mode, the SHDLC mode allows a communication in parallel between terminal application and terminal interface application on one hand and between terminal application and NFC controller on another hand.

According to an embodiment, said second controller interface and said host device interface are interfaces of the NCI type, and said second communication channel may be a bus of the I²C, UART or SPI type.

The secure element may be for example a UICC or a SD card removably fixed, or an embedded secure element permanently fixed within said apparatus.

As defined within ETSI TR 102 216 V3.0.0 (2003-09), UICC which is neither an abbreviation nor an acronym, designates a smart card that conforms to the specifications written and maintained by the ETSI Smart Card Platform project.

Other advantages and features of the invention will appear on examining the detailer description of embodiments, these being in no way limiting, and of the appended drawings, in which:
- Figure 1 illustrates schematically an embodiment of an apparatus according to the invention,
- Figures 2 and 3 illustrate connections between two elements through a SWP link, and
- Figures 4 and 5 illustrate diagrammatically examples of operation of the apparatus illustrated in figure 1.

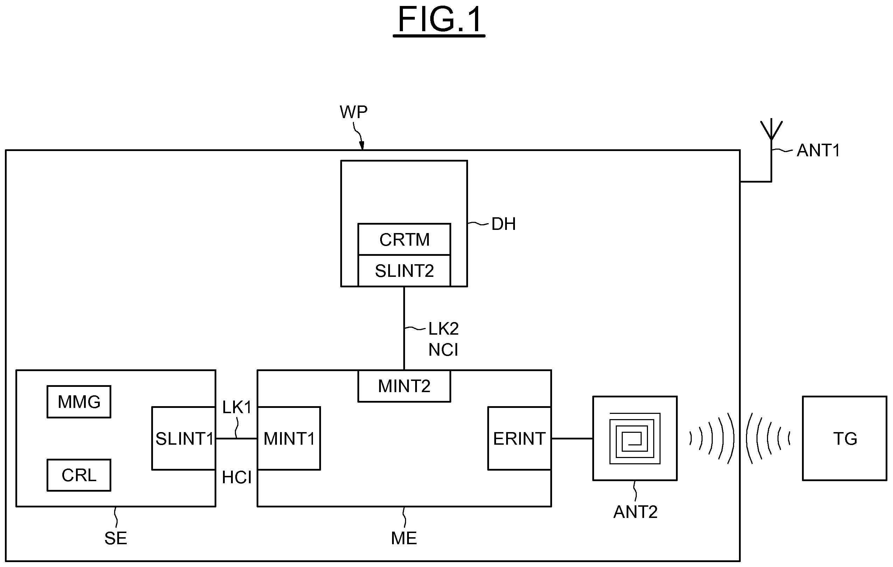

Figure 1 illustrates a NFC apparatus WP, e.g. a NFC mobile phone, provided with an antenna ANT1 for conventional telephone communication.

As the apparatus is an NFC apparatus, it further comprises a contactless front end element ME, such as a NFC controller, which is responsible for wireless communication, for example radiofrequency (RF) communication, with an external RF tag TG through an antenna ANT2.

Encrypted frames are thus exchanged through antenna ANT2 between the mobile phone WP acting as a reader/writer, and the tag TG. As an example, the exchanged frames can be encrypted according to a proprietary encryption algorithm as for example the MIFARE™ or FeliCa™ encryption algorithm. However, the invention is not limited to theses particular examples, and can apply to any encrypted frames encrypted according to any kind of encryption algorithm.

The NFC controller ME comprises an emission/reception interface ERINT connected to said antenna ANT2, a first controller interface MINT1 and a second controller interface MINT2.

The NFC apparatus WP comprises also a secure element SE which can be an embedded secure element permanently fixed within said apparatus WP, i.e. without being able to be removed, or a UICC.

The secure element SE includes a secure element interface SLINT1 connected to the first interface MINT1 of the NFC controller by a first communication channel or link LK1.

The secure element comprises also encryption/decryption means or cryptolibrary CRL configured to encrypt data to be sent on said first communication channel LK1 for being framing into the encrypted frames exchanged between the apparatus WP and the tag TG and to decrypt encrypted data extracted from said encrypted frames and received from said first communication channel LK1.

The secure element SE comprises also management means MMG called also "terminal application", configured to control the encryption/decryption means for managing the encrypted communication with said NFC controller.

The cryptolibrary may be realized by a specific logic circuit while the management means may be realized by software within a microcontroller.

In the present embodiment, the first communication LK1 is a SWP link.

The Single Wire Protocol (SWP) is a bit oriented, point-to-point communication protocol between a secure element and a contactless front end, and is specified in the standard ETSI TS 102 613, for example the version V7.7.0 (2009-10) thereof. The man skilled in the art could refer if necessary to this document.

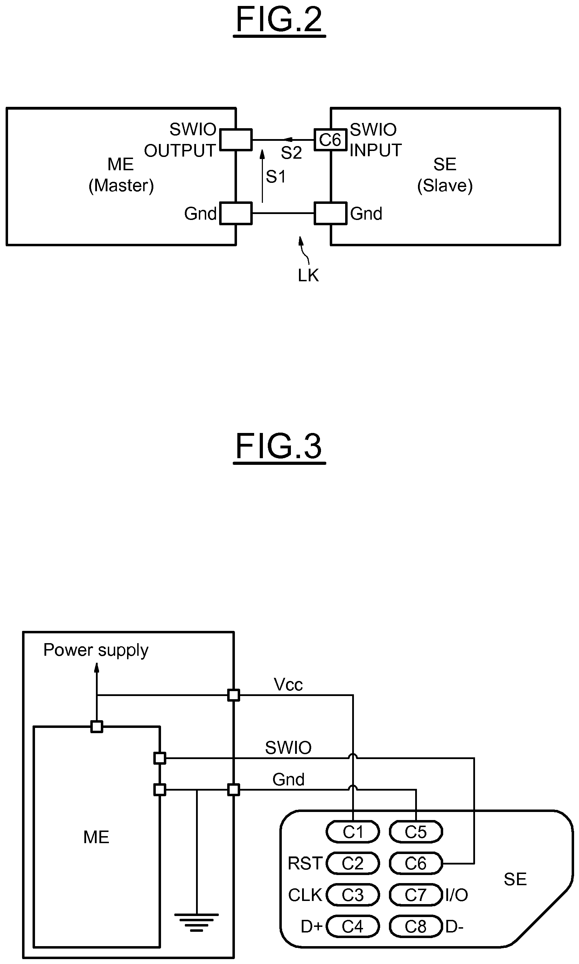

More precisely, as illustrated in figure 2, the NFC controller ME is the master whereas the secure element SE is a slave.

As disclosed in ETSI TS 102 613, the principle of the single wire protocol (SWP) is based on the transmission of digital information in full duplex mode. The signal S1 from ME to SE is transmitted by a digital modulation (L or H) in the voltage domain whereas the signal S2 from SE to ME is transmitted by a digital modulation (L or H) in the current domain.

When the master sends S1 as state H then the slave may either draw a current (state H) or not (state L) and thus transmits S2. With pulse width modulation bit coding of S1, it is possible to transmit a transmission clock, as well as data in full duplex mode. More details can be found in ETSI TS 102 613.

Figure 3 represents an embodiment of the physical link between the contactless element ME and the secure element SE. More precisely, as illustrated in this figure and explained in ETSI TS 102 613, the contact C6 of the secure element is connected to the port SWIO of the contactless element ME for transmission of signal S1 and S2.

The SWP link uses HCI (Host Controller Interface) as disclosed within ETSI TS 102 613 and ETSI TS 102 622. In other words, the NFC controller interface MINT1 and the secure element interface SLINT1 are interfaces of the HCI type.

As indicated in ETSI TS 102 622, for example version 11.00 (2011-09), the HCI defines the interface between the NFC controller and the secure element. More specifically, the HCI has three levels:
- a collection of gates that exchange commands, responses and events,
- an HCP (Host Controller Protocol) messaging mechanism, and
- an HCP routine mechanism that may optionally segment messages when required.

The HCP requires in particular that the underlying data link layer (e.g. SWP) shall be error-free and the order of the received/sent data shall be respected.

As explained in ETSI TS 102 613, LLC (Logical Link Control) layer is in charge of error management and flow control while MAC (Medium Access Control) layer is in charge of framing on the SWP link LK1. Among the three LC layers defined in ETSI TS 102 613, one can cite the LLC layer called SHDLC (Simplified High Level Data Link Control) LLC and the CLT (Contactless Tunnelling) LLC.

In fact, as it will be explained more in details thereafter, the SWP link LK1 carries two logical channels (or pipes) for respectively carrying encrypted data coming from and intended to the RF communication with the tag and non encrypted commands exchanged between the management means (terminal application) and control means (terminal interface application) lodged in the device host DH, for example a microprocessor.

And, although it would be possible for both interfaces SLINT1 and MINT1 to use the CLT mode, it is preferable that these interfaces use the SHDLC mode in order to allow in parallel a communication between terminal application and terminal interface application for exchanging non encrypted commands, and a communication between terminal application and NFC controller for exchanging encrypted data.

As a matter of fact, the SHDLC mode defines logical channel identification mechanism: each message starts with a header.

In this header a PipeID defined at Pipe creation will provide identification communication channel (Pipe).

Then messages on different pipes can be interleaved without any limitation.

The CLT mode does not propose such header with Pipeld feature.

Turning now to the device host DH, as explained before, it includes control means CRTM configured to control said management means MMG through non encrypted commands.

The device host DH further comprises a device host interface SLINT2 coupled to the second controller interface MINT2 by a second communication channel LK2.

The second controller interface MINT2 and the device host interface SLINT2 are preferably interfaces of the NCI (NFC Controller Interface) type. The communication protocol called NCI, between an NFC controller and a device host is for example described in the document entitled "NFC Forum-TS-NCI-1.0_candidate_1, April 12, 2012". The man skilled in the art may refer to this document if necessary.

And, the second communication channel LK2 may be, for example, a bus of the I²C, UART, or SPI type.

The control means CRTM is also responsible for managing a user input.

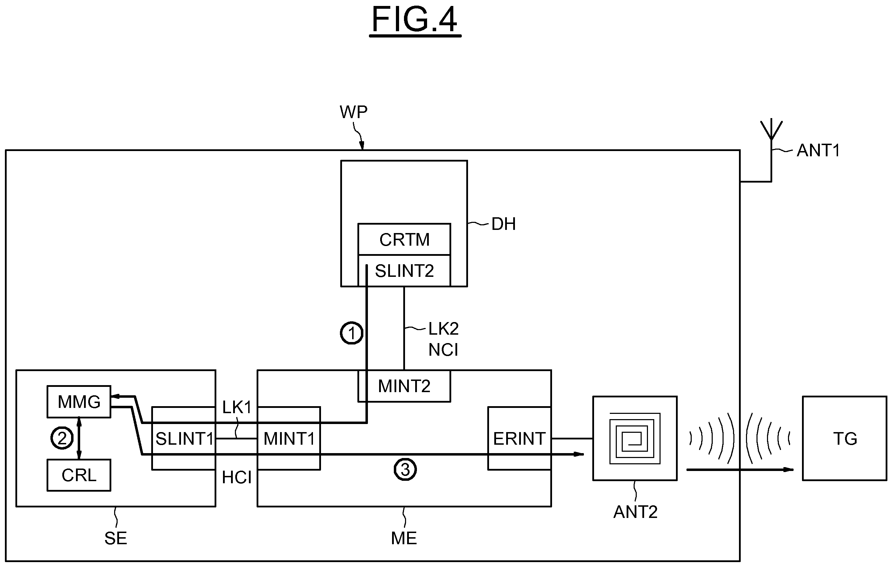

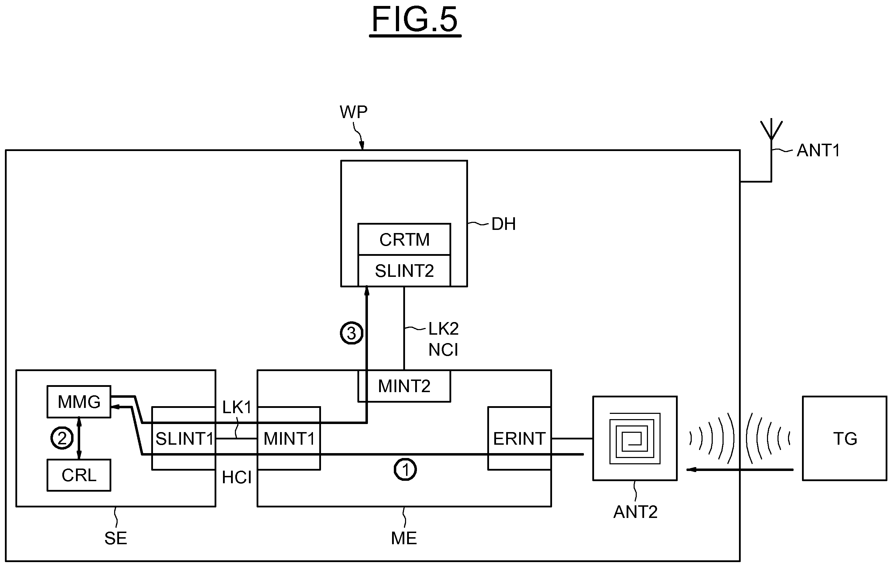

We refer now more specifically to figures 4 and 5, for explaining the operation of the tag reader/writer WP.

When the mobile phone WP wants to write the tag TG (Figure 4), non encrypted commands are sent① by the control means CRTM of the device host DH to the management means MMG of the secure element through interface SLINT2, link LK2, interface MINT2, interface MINT1, link LK1 and interface SLINT1.

The management means, which can be considered in fact as equivalent to a command interpreter, manage② the encryption means CRL in the cryptolibrary in order to encrypt data and eventually parity bits, to be sent to the tag TG.

The encryption bits are then transmitted③ to the NFC controller ME through interface SLINT1, link LK1 and interface MINT1. The encrypted bits are then framed into frames corresponding to the communication protocol by the NFC controller and then sent to the tag TG through antenna NT2.

When the mobile phone wants to read the tag TG (Figure 5), the encrypted frames are read① from said tag through antenna ANT2 by the NFC controller ME. Then, the raw encrypted data are then extracted from said frames and are transmitted① to the secure element SE through link LK1. The management means MMG control② the decryption means for decrypting the received encrypted data and also verifying eventually the parity bits.

Then, information corresponding to these decrypted received data and containing eventually commands, is transmitted③ to the control means CRTM of the device host DH through links LK1 and LK2.

It should be noted that such architecture, in which the terminal application (management means MMG) are hosted in the secure element for directly controlling the cryptolibrary, is an enhanced architecture permitting to improve the data flow, the transaction time and security with respect to another architecture in which the terminal application would be hosted in the device host.

As a matter of fact, with such another architecture, it is necessary to provide the device host with a crypto interface. Further, the terminal application uses a crypto interface to de/encrypt the communication with the tag and as a cryptolibrary is placed in the embedded secure element, the cryptolibrary has to establish a connection via the NFC controller and a HCI pipe for data de/encryption, rendering such another architecture not optimal in term of data flow, transaction time and security.

In some communication protocols, as for example in the MIFARE™ communication, the parity bits are calculated from plain text and then these calculated parity bits are then encrypted. More precisely, the parity bit associated to the byte N can be encrypted with the same key bit as the one used for encrypting the first bit of the following byte N+1.

Thus, in such a case, the NFC controller receiving the encrypted data and encrypted parity bits from the secure element must not calculate parity bits according to ISO/IEC 14443. The NFC controller must only take the encrypted information received from the secure element and frame this information into frames corresponding to ISO/IEC 14443.

In reception, the encrypted data and encrypted parity bits received from the tag by the NFC controller into frames, are just extracted from said frames without checking the parity bits and then transmitted on the link LK1 to the secure element to be decrypted. The check of the parity bits is then made in the secure element.

## Claims

1. NFC apparatus capable to perform a contactless tag reading/writing function, comprising
- an antenna (ANT2) configured to cooperate with said tag (TG) for exchanging encrypted frames with said tag,
- a NFC controller (ME) including an emission/reception interface (ERINT) connected to said antenna (ANT2), a first controller interface (MINT1) and a second controller interface (MINT2),
- a first communication channel (LK1) coupled to said first controller interface,
- a second communication channel (LK2) connected to said second controller interface,
- a secure element (SE) including a secure element interface connected to said first communication channel, encryption/decryption means (CRL) configured to encrypt data to be sent on said first communication channel for being framed into said encrypted frames and to decrypt encrypted data extracted from said encrypted frames and received from said first communication channel, management means (MMG) configured to control said encryption/decryption means for managing the encrypted communication with said NFC controller,
- a device host (DH) including a host device interface coupled to said second controller interface and control means (CRTM) configured to control said management means through non encrypted commands exchanged on said first and second communication channels.

2. NFC apparatus according to claim 1, wherein said first controller interface (MINT1)and said secure element interface (SLINT1) are interfaces of the HCI type, said first communication channel is a SWP physical link configured to carry two logical channels for respectively carrying said encrypted data and said non encrypted commands.

3. NFC apparatus according to claim 2, wherein both interfaces of the HCI types are configured to exchange data there between by using SHDLC mode.

4. NFC apparatus according to any one of the preceding claims, wherein said second controller interface (MLINT2) and said device host interface (SLINT2) are interfaces of the NCI type, and said second communication channel is a bus of the I²C, UART, or SPI type.

5. NFC apparatus according to any one of the preceding claims, wherein said secure element (SE) is permanently or removably fixed within said apparatus.

6. NFC apparatus according to any one of the preceding claims, forming a mobile phone.

## Patentansprüche

1. NFC-Vorrichtung, die imstande ist, eine kontaktlose Tag-Lese-/Schreibfunktion durchzuführen, die Folgendes aufweist:
- eine Antenne (ANT2), die konfiguriert ist, um mit dem Tag (TG) zum Austauschen von verschlüsselten Frames mit dem Tag zusammenzuwirken,
- eine NFC-Steuerung (ME), die eine Sende-/Empfangsschnittstelle (ERINT), die mit der Antenne (ANT2) verbunden ist, eine erste Steuerungsschnittstelle (MINT1) und eine zweite Steuerungsschnittstelle (MINT2) aufweist,
- einen ersten Kommunikationskanal (LK1), der an die erste Steuerungsschnittstelle gekoppelt ist,
- einen zweiten Kommunikationskanal (LK2), der mit der zweiten Steuerungsschnittstelle verbunden ist,
- ein sicheres Element (SE), das eine Schnittstelle für das sichere Element, die mit dem ersten Kommunikationskanal verbunden ist, Verschlüsselungs-/Entschlüsselungsmittel (CRL), die konfiguriert sind, um Daten zu verschlüsseln, die auf dem ersten Kommunikationskanal zum Rahmen in die verschlüsselten Frames zu senden sind, und um verschlüsselte Daten zu entschlüsseln, die aus den verschlüsselten Frames extrahiert und von dem ersten Kommunikationskanal empfangen werden, Verwaltungsmittel (MMG), die konfiguriert sind, um die Verschlüsselungs-/Entschlüsselungsmittel zum Verwalten der verschlüsselten Kommunikation mit der NFC-Steuerung zu steuern, aufweist,
- einen Gerätehost (DH), der eine Hostgeräteschnittstelle, die an die zweite Steuerungsschnittstelle gekoppelt ist, und Steuermittel (CRTM), die konfiguriert sind, um die Verwaltungsmittel durch nicht verschlüsselte Befehle zu steuern, die auf dem ersten und zweiten Kommunikationskanal ausgetauscht werden, aufweist.

2. NFC-Vorrichtung nach Anspruch 1, wobei die erste Steuerungsschnittstelle (MINT1) und die Schnittstelle (SLINT1) für das sichere Element Schnittstellen vom HCI-Typ sind, wobei der erste Kommunikationskanal eine physische SWP-Verbindung ist, die konfiguriert ist, um zwei logische Kanäle zum jeweiligen Tragen der verschlüsselten Daten und der nicht verschlüsselten Befehle zu tragen.

3. NFC-Vorrichtung nach Anspruch 2, wobei beide Schnittstellen vom HCI-Typ konfiguriert sind, um Daten dazwischen unter Verwendung eines SHDLC-Modus auszutauschen.

4. NFC-Vorrichtung nach einem der vorhergehenden Ansprüche, wobei die zweite Steuerungsschnittstelle (MLINT2) und die Gerätehostschnittstelle (SLINT2) Schnittstellen vom NCI-Typ sind und der zweite Kommunikationskanal ein Bus vom I²C-, UART- oder SPI-Typ ist.

5. NFC-Vorrichtung nach einem der vorhergehenden Ansprüche, wobei das sichere Element (SE) permanent oder entfernbar innerhalb der Vorrichtung befestigt ist.

6. NFC-Vorrichtung nach einem der vorhergehenden Ansprüche, die ein Mobiltelefon bildet.

## Revendications

1. Dispositif NFC capable de réaliser une fonction de lecture/écriture d'étiquette sans contact, comprenant
une antenne (ANT2) configurée pour coopérer avec ladite étiquette (TG) pour échanger des trames cryptées avec ladite étiquette,
une unité de commande NFC (ME) incluant une interface d'émission/réception (ERINT) connectée à ladite antenne (ANT2), une première interface d'unité de commande (MINT1) et une seconde interface d'unité de commande (MINT2),
un premier canal de communication (LK1) couplé à ladite première interface d'unité de commande,
un second canal de communication (LK2) connecté à ladite seconde interface d'unité de commande,
un élément sécurisé (SE) incluant une interface d'élément sécurisé connectée audit premier canal de communication, des moyens de cryptage/décryptage (CRL) configurés pour crypter des données à envoyer sur ledit premier canal de communication pour être tramées dans lesdites trames cryptées et pour décrypter des données cryptées extraites desdites trames cryptées et reçues depuis ledit premier canal de communication, des moyens de gestion (MMG) configurés pour commander lesdits moyens de cryptage/décryptage pour gérer la communication cryptée avec ladite unité de commande NFC,
un dispositif hôte (DH) incluant une interface de dispositif hôte couplée à ladite seconde interface d'unité de commande et des moyens de commande (CRTM) configurés pour commander lesdits moyens de gestion par l'intermédiaire de commandes non cryptées échangées sur lesdits premier et second canaux de communication.

2. Dispositif NFC selon la revendication 1, dans lequel ladite première interface d'unité de commande (MINT1) et ladite interface d'élément sécurisé (SLINT1) sont des interfaces du type HCI, ledit premier canal de communication est une liaison physique SWP configurée pour porter deux canaux logiques pour porter respectivement lesdites données cryptées et lesdites commandes non cryptées.

3. Dispositif NFC selon la revendication 2, dans lequel les deux interfaces de types HCI sont configurées pour échanger des données entre elles en utilisant un mode SHDLC.

4. Dispositif NFC selon l'une quelconque des revendications précédentes, dans lequel ladite seconde interface d'unité de commande (MLINT2) et ladite interface hôte de dispositif (SLINT2) sont des interfaces du type NCI, et ledit second canal de communication est un bus du type I²C, UART, ou SPI.

5. Dispositif NFC selon l'une quelconque des revendications précédentes, dans lequel ledit élément sécurisé (SE) est fixé de manière permanente ou amovible dans ledit dispositif.

6. Dispositif NFC selon l'une quelconque des revendications précédentes, formant un téléphone mobile.
